# EUROPÄISCHE PATENTANMELDUNG

(11) **EP 4 201 999 A1**
(43) Veröffentlichungstag der Anmeldung: **28.06.2023**
(21) Anmeldenummer: 21216439.6
(22) Anmeldetag: 21.12.2021
(51) Int. Cl.: C09C 1/24

(54) **VERFAHREN ZUR HERSTELLUNG VON EISENOXIDPIGMENTEN**

(71) Anmelder: LANXESS Deutschland GmbH, 50569 Köln (DE)
(72) Erfinder: BOERS, Matthias, 47802 Krefeld (DE); ETZENBACH, Norbert, 50735 Köln (DE); RIDDER, Stefan, 47829 Krefeld (DE)

(57) **Zusammenfassung**

Die vorliegende Erfindung betrifft ein Verfahren zur Herstellung von Eisenoxidpigment gemäß dem Penniman-Prozess, dadurch gekennzeichnet, dass kein separater Keimherstellungsschritt erfolgt sowie die Verwendung von solchen Eisenoxidpigmenten.

## Beschreibung

Die vorliegende Erfindung betrifft ein Verfahren zur Herstellung von Eisenoxidpigmenten gemäß dem Penniman-Prozess, dadurch gekennzeichnet, dass kein separater Keimherstellungsschritt erfolgt, sowie die Verwendung von solchen Eisenoxidpigmenten.

Eisenoxidfarbpigmente, die als ökologisch unbedenkliche Färbemittel in Keramiken, Baustoffen, Kunststoffen, Lacken und Papier zum Einsatz kommen, können grundsätzlich in schwarzen, gelben, roten, orangen und braunen Farbtönen erhalten werden.

Eisenoxidpigmente erhält man, wie in Ullmann's Encyclopedia of Industrial Chemistry, VCH, Weinheim 1992, Vol. A20, S. 298ff beschrieben, durch Festphasenreaktionen (rote, braune, und schwarze Pigmente), Fällungs- und Hydrolysereaktionen von Eisensalzen (gelbe, rote, orange und schwarze Pigmente) sowie durch Oxidation von Eisen mit aromatischen Nitroverbindungen in Gegenwart hydrolysierbarer, mehrwertiger Salze, dem sogenannten Lauxprozess, wie er beispielsweise in DE 4 63 773 A1 und DE 5 15 758 A1 offenbart wird.

Die Festphasenreaktionen werden überwiegend zur Produktion von roten Eisenoxiden aus schwarzen Vorläuferprodukten (durch Kalzination) oder aus FeSO₄ (Copperas-Prozess) angewendet.

### a) Laux-Verfahren

Das Laux-Verfahren geht von Nitrobenzol und Fe-Metall aus und führt zuerst zu Eisenoxidschwarz oder Eisenoxidgelb und Anilin. Um nach diesem Verfahren Eisenoxidrot herzustellen, wird das erhaltene Eisenoxidschwarz verglüht. Das Verfahren ist technisch aufwändig und nicht leicht zu beherrschen, da zur Einstellung der gewünschten Teilchengröße variable Anteile an Steuerchemikalien eingesetzt werden müssen. Darüber hinaus ist die erforderliche Apparatetechnik anspruchsvoll und entsprechend teuer. Weiterhin entsteht bei der Reaktion als zweites Produkt Anilin, das aufgrund seiner Eigenschaften besondere arbeitshygienische Maßnahmen erforderlich macht.

### b) Fällungsverfahren

Gelbe, orange, rote und schwarze Eisenoxidpigmente können über den Fällungsprozess hergestellt werden (US 2,388,659 A1 für Eisenoxidgelbpigmente sowie US 5,421,878 A1 für Eisenoxidrot nach einem direkten Fällungsverfahren).

Über den Fällungsprozess erhaltene Eisenoxidpigmente werden aus Eisensalzlösungen und alkalischen Verbindungen in Gegenwart von Luft erzeugt und sind mit dem Nachteil verbunden, dass stöchiometrische Mengen von Neutralsalzen erzeugt werden, die mit dem Abwasser abgeführt oder zeit- und kostenintensiv aufgearbeitet werden müssen. Das direkte Fällungsverfahren ist verfahrenstechnisch schwierig, da α-Fe₂O₃ nur in einem schmalen Bereich zugänglich ist und die Reaktion nicht leicht zu beherrschen ist. Das durch das Fällungsverfahren hergestellte Eisenoxidrot hat den Nachteil hoher Salzfrachten, die das Abwasser belasten und dadurch ökologisch bedenklich sind.

### c) Hydrothermalverfahren

Das Hydrothermalverfahren ist beispielsweise in DE 19917786 A1 beschrieben. Nach dem Hydrothermalverfahren lassen sich gute Eisenoxidrotpigmente für höherwertige Anwendungen besonders für Farbe und Lacke herstellen. Nachteilig wirken sich hier jedoch die hohen Verfahrenskosten bedingt durch die Drucktechnik aus. Für einfachere Anwendungen, bei denen preiswerte Produkte erforderlich sind, ist dieses Verfahren deshalb nicht geeignet.

### d) Penniman-Prozess

Gemäß dem Penniman-Prozess (beispielsweise in US 1,327,061 und US 1,368,748 offenbart) werden Eisenoxidrotpigmente dadurch hergestellt, dass Eisenmetall unter Zusatz eines Eisenoxidrotkeims gelöst und oxidiert wird. Hierbei wird zur Keimherstellung in der Regel Salpetersäure eingesetzt, so dass sich im Abwasser Nitrat oder Ammoniak befinden, die unter hohem verfahrenstechnischen Aufwand entfernt werden müssen. Dies führt wie beim Hydrothermalverfahren und beim Fällverfahren zur Steigerung der Herstellkosten.

Der Penniman-Prozess reduziert jedoch die Menge an Neutralsalzen, die während des Fällungsvorgangs entsteht, durch Verwendung von metallischem Eisen als Rohstoff, das während des Prozesses durch freiwerdende Säure aufgelöst wird. Mit dem Penniman Prozess steht somit zur direkten Erzeugung von Eisenoxidpigmenten ein kostengünstiges Verfahren zur Verfügung.

Ein weiterer Vorteil des Penniman- Prozesses ist die Erzeugung von Pigmenten mit vorteilhaften Farbtönen bei geringem Anfall von Neutralsalzen.

Nachteilig am Penniman-Prozess ist jedoch die Notwendigkeit zweier Prozessschritte: 1) Keimbildung und 2) Pigmentaufbau. Diese Herstellung ist deshalb operativ aufwändig. Während der Keimherstellung bilden sich giftige nitrose Gase, die einer Aufarbeitung bedürfen. Auch fallen zu deponierende Rückstände und schwermetallhaltige Abwässer an. Der Penniman-Prozess ist auch zeitlich aufwändig um den gewünschten Farbton zu treffen. Die Einstellung eines bestimmten Farbtones erfordert ferner eine ständige, aufwändige Überwachung des Herstellungsprozesses durch geschulte Mitarbeiter.

Der vorliegenden Erfindung lag daher die Aufgabe zugrunde, Eisenoxidpigmente durch einen wesentlich vereinfachten Pennimanprozess herzustellen. Ferner lag der Erfindung die Aufgabe zugrunde, die mit den Keimherstellungsschritt verbundenen Nachteile, wie beispielsweise giftige nitrose Gase und zu deponierendem Rückstand und schwermetallhaltigen Abwässern zu minimieren beziehungsweise zu unterbinden.

Diese Aufgabe wurde überraschender Weise dadurch gelöst, das Eisenoxidpigment gemäß dem Penniman-Prozess ohne einen separaten Keimherstellungsschritt hergestellt wurde.

Das Eisenoxidpigment wird vorzugsweise so hergestellt, dass
a) eine Lösung enthaltend Eisen, Eisen(II)nitrat und Wasser vorgelegt wird;
b) die Lösung erhitzt wird;
c) während und/oder nach der Erhitzung sauerstoffhaltige Gase zur Lösung zugeführt werden um eine Pigmentsuspension zu erhalten; und
d) die Pigmentsuspension anschließend filtriert, gewaschen und/oder getrocknet wird.

Der Anteil von Eisen bezogen auf das Gesamtvolumen der Lösung beträgt vorzugsweise von 1 bis 250 g/l, bevorzugt von 40 bis 85 g/l, ganz besonders bevorzugt von 50 bis 75 g/l.

Der Anteil von Eisen(II)nitrat bezogen auf das Gesamtvolumen der Lösung beträgt vorzugsweise von 1 bis 250 g/l, bevorzugt von 40 bis 50 g/l, ganz besonders bevorzugt von 44 bis 46 g/l. Insbesondere bevorzugt beträgt der Anteil von Eisen(II)nitrat bezogen auf das Gesamtvolumen der Lösung 45 g/l.

Die Lösung wird bevorzugt unter Atmosphärendruck auf von 60 bis 100 °C, bevorzugt auf von 70 bis 95 °C, ganz besonders bevorzugt auf von 84 bis 86 °C, erhitzt. Insbesondere bevorzugt wird die Lösung unter Atmosphärendruck auf 85 °C erhitzt.

Sofern unter Druck gearbeitet wird, wird die Lösung vorzugsweise auf von 50 bis 250 °C, bevorzugt auf von 100 bis 200 °C, erhitzt.

Es werden vorzugsweise von 1 bis 200 l/h sauerstoffhaltige Gase/l Lösung, bevorzugt von 10 bis 40 l/h sauerstoffhaltige Gase/l Lösung, ganz besonders bevorzugt von 25 bis 35 l/h sauerstoffhaltige Gase/l Lösung, insbesondere bevorzugt 30 l/h sauerstoffhaltige Gase/l Lösung zugeführt.

Es wird bevorzugt Luft als sauerstoffhaltiges Gas eingesetzt.

Die Zufuhr von sauerstoffhaltigem Gas erfolgt vorzugsweise über einen Zeitraum von 5 bis 150 Stunden, bevorzugt über einen Zeitraum von 50 bis 120 Stunden, ganz besonders bevorzugt über einen Zeitraum von 65 bis 75 Stunden.

So lässt sich durch geschickte Wahl der Ausgangs- und Reaktionsbedingungen nicht nur der gewünschte Farbort im Vergleich zur herkömmlichen Penniman-Prozess besser einstellen, sowie auch ein Großteil der aufwändigen Überwachungsschritte des Herstellprozesses reduzieren.

Zudem lassen sich Farbräume erschließen, welche zuvor mit dem bisher bekannten Penniman-Prozess so nicht erreichbar wären. Solche Farbwerte werden zum Teil in Diagramm I dargestellt.

Das aus dem Verfahren resultierende Eisenoxidpigment wird vorzugsweise desagglomeriert und/oder gemahlen und/oder thermisch behandelt. Dabei wird vorzugsweise ein die Verarbeitbarkeit fördernder Zusatzstoff zum Pigment zugesetzt.

Die Erfindung umfasst auch die Verwendung des erfindungsgemäßen Eisenoxidpigments zum Einfärben von kalk- und/oder zementgebundenen Baustoffen, Asphalt, Farben, Lacken, Farbgelen, Papier, Kunststoffen, Lebensmittelfarbstoffen und/oder pharmazeutischen Produkten. Dabei wird das Eisenoxidpigment vorzugsweise mit den kalk- und/oder zementgebundenen Baustoffen, Asphalt, Farben, Lacken, Farbgelen, Papier, Kunststoffen, Lebensmittelfarbstoffen und/oder pharmazeutischen Produkten vermischt.

Das Eisenoxidpigment wird vorzugsweise als technisches Oxid im Bereich Katalysatoren, Schleifmittel usw. eingesetzt.

Der Erfindungsgegenstand der vorliegenden Erfindung ergibt sich nicht nur aus dem Gegenstand der einzelnen Patentansprüche, sondern auch aus der Kombination der einzelnen Patentansprüche untereinander. Gleiches gilt für alle in der Beschreibung offenbarten Parameter und deren beliebigen Kombinationen.

Anhand der nachfolgenden Beispiele wird die Erfindung näher erläutet, ohne dass dadurch eine Einschränkung der Erfindung bewirkt werden soll.

### I. Beschreibung der verwendeten Messmethoden

### I.1 Apparatur

Beheizbarer 9-Liter-Stahlkessel, Siebbodeneinsatz, Begasungsring, Blattrührer, pH-Einstabmesskette, Thermoelement.

### I.2 Arbeitsvorschrift

In den Stahlkessel wurde die Lösung, enthaltend Eisen, Eisen(II)nitrat und Wasser, vorgelegt. Diese Lösung wurde danach erhitzt. Die erhitzte Lösung wurde mit Luft für eine bestimmte Zeit begast. Diese Begasung der Lösung wurde durchgeführt bis die Pigmentsuspension den gewünschten Farbraum erreichte. Danach wurde die entstandene Pigmentsuspension filtriert und der so erhaltene Pigmentfilterkuchen mit Wasser gewaschen, getrocknet und gemahlen.

### I.3 Farbmessung (Purton)

Die farbliche Auswertung der Pigmente erfolgte in Alkydal L 64^{®} thixotrop (nichthärtendes Alkydharz der Firma. Bayer AG) bei einer Pigmentvolumenkonzentration von 10 %. Die Bestimmung der Remissionswerte und CIELAB-Daten (DIN 5033, Teil 7) erfolgte mit einem Messgerät mit Ulbrichtkugel (Beleuchtungsbedingungen d/8", Normlichtart CI2") unter Einschluss der Oberflächenreflektion. Die erhaltenen Remissionswerte wurden nach DIN 5033, Teil 3 in das CIELAB- Farbdatensystem umgerechnet.

Es wurde ein Spektrophotometer ("Farbmessgerät") mit der Messgeometrie d/8 ohne Glanzfalle verwendet. Diese Messgeometrie ist in ISO 7724/2-1984 (E), Punkt 4.1.1, in DIN 5033 Teil 7 (Juli 1983), Punkt 3.2.4 und in DIN 53236 (Januar 1983), Punkt 7.1.1 beschrieben.

Zur Anwendung kam ein DATAFLASH^{®} 2000-Meßgerät (Datacolor International Corp., USA). Das Farbmessgerät wurde gegen einen weißen, keramischen Arbeitsstandard kalibriert, wie in ISO 7724/2-1984 (E) Punkt 8.3 beschrieben. Die Reflexionsdaten des Arbeitsstandards gegen einen ideal mattweißen Körper sind im Farbmessgerät hinterlegt, so dass nach Kalibrierung mit dem weißen Arbeitsstandard alle Farbmessungen auf den ideal mattweißen Körper bezogen werden. Die Schwarzpunktkalibrierung wurde mit einem schwarzen Hohlkörper des Farbmessgeräteherstellers ausgeführt.

Das Ergebnis der Farbmessung ist ein Reflexionsspektrum. Für die Berechnung von farbmetrischen Größen spielt es keine Rolle, bei welcher Lichtart die Messung erfolgte (außer bei fluoreszierenden Proben). Aus dem Reflexionsspektrum kann jede beliebige farbmetrische Größe berechnet werden. Die in diesem Fall verwendeten farbmetrischen Größen werden gemäß der DIN 6174 (CIELAB-Werte) berechnet. Unter anderem wird gemäß der DIN 6174 der Farbwert "b^{∗}" ausgerechnet. Für den Farbeindruck gilt: je negativer b^{∗} ist, desto blaustichiger ist das Farbpigment.

Eine eventuell vorhandene Glanzfalle war ausgeschaltet. Die Temperatur von Farbmessgerät und Prüfling betrug ca. 25 °C ± 5 °C.

### 1.4 Resteisen

Die Ermittelung des Resteisens erfolgte im Anschluss der Reaktion, in dem das nicht verbrauchte Eisen nach dem Abspülen mittels Wasser und Trocknung bei 80 °C im Umlufttrockenschrank zurück gewogen wurde.

### I.5 Fe- Endanalyse

Die Fe-Bestimmung erfolgte mittels Cerimetrie unter Inert-Bedingungen. Nach dem Aufschluss von 2 bis 10 cm³ (abhängig von der Feststoffkonzentration) der Probe in 20 cm³ Wasser und 20 cm³ Salzsäure (37%ig), wurde die so erhaltene Eisen(II),(III)-chloridlösung mit 10 cm³ Schwefelsäure (ca. 48,5 Gew.%) versetzt, auf 200 cm³ mit VE-Wasser aufgefüllt und an einem Titrierautomaten (Mettler-Memotitrator DL70) potentiometrisch titriert. Für die Titration fand eine titerstabile Cer(IV)-sulfatmaßlösung (c[Ce(SO4)2] = 0,25mol/l) Verwendung, wobei die eigentliche Titration in mehreren Schritten erfolgte, die von dem Titrierautomaten gesteuert wurden.

Im ersten Schritt wurde das Eisen(II) mit Cer(IV)-sulfatlösung zum Eisen(III) oxidiert. Im zweiten Schritt erfolgt die Reduktion des Eisen (III) zum Eisen(II) mit einem kleinen Überschuss an 7 %iger Titan(III)-chloridlösung (ca.7 %ig in 10%iger HCl). Im dritten Schritt wurde das Gesamt-Eisen mit Cer(IV)-sulfatlösung in einer 2-Stufentitration titriert, wobei zunächst der aus der Reduktion stammende Titan(III)-Überschuss zu Titan(IV) und dann das Eisen(II) zu Eisen(III) oxidiert wurde. Die Titrationsergebnisse wurden dann vom Titrierautomaten aus den Rohdaten ermittelt und ausgegeben.
**I. Beispiel 1: Laufzeit 116 h**

| Ansatz-Volumen | Fe(NO₃)₂ | Eisen | Temperatur | Luft | CIELAB- Farbwerte Purton | | |
|---|---|---|---|---|---|---|---|
| | | | | | | a^{∗} | b^{∗} |
| [cm³] | [g/l] | [g] | [°C] | [l/h/l Ansatz] | L^{∗} | | |
| 5110 | 45 | 366 | 85 | 30 | 38,0 | 28,5 | 19,2 |

**II. Beispiel 2: Laufzeit 106 h**

| Ansatz-Volumen | Fe(NO₃)₂ | Eisen | Temperatur | Luft | CIELAB- Farbwerte Purton | | |
|---|---|---|---|---|---|---|---|
| | | | | | L^{∗} | a^{∗} | b^{∗} |
| [cm³] | [g/l] | [g] | [°C] | [l/h/l Ansatz] | | | |
| 7000 | 45 | 366 | 85 | 30 | 36,3 | 24,3 | 14,0 |

**III. Beispiel 3: Laufzeit 72 h**

| Ansatz-Volumen | Fe(NO₃)₂ | Eisen | Temperatur | Luft | CIELAB- Farbwerte Purton | | |
|---|---|---|---|---|---|---|---|
| | | | | | L^{∗} | a^{∗} | b^{∗} |
| [cm³] | [g/l] | [g] | [°C] | [l/h/l Ansatz] | | | |
| 7000 | 25 | 366 | 85 | 30 | 36,5 | 17,3 | 11,2 |

**IV. Beispiel 4: Laufzeit 72 h**

| Ansatz-Volumen | Fe(NO₃)₂ | Eisen | Temperatur | Luft | CIELAB- Farbwerte Purton | | |
|---|---|---|---|---|---|---|---|
| | | | | | L^{∗} | a^{∗} | b^{∗} |
| [cm³] | [g/l] | [g] | [°C] | [l/h/l Ansatz] | | | |
| 7000 | 85 | 366 | 85 | 30 | 38,7 | 25,9 | 19,3 |

**V. Beispiel 5: Laufzeit 59 h**

| Ansatz-Volumen | Fe(NO₃)₂ | Eisen | Temperatur | Luft | CIELAB- Farbwerte Purton | | |
|---|---|---|---|---|---|---|---|
| | | | | | L^{∗} | a^{∗} | b^{∗} |
| [cm³] | [g/l] | [g] | [°C] | [l/h/l Ansatz] | | | |
| 7000 | 45 | 366 | 75 | 30 | 42,4 | 20,3 | 19,8 |

**VI. Beispiel 6: Laufzeit 59 h**

| Ansatz-Volumen | Fe(NO₃)₂ | Eisen | Temperatur | Luft | CIELAB- Farbwerte Purton | | |
|---|---|---|---|---|---|---|---|
| | | | | | L^{∗} | a^{∗} | b^{∗} |
| [cm³] | [g/l] | [g] | [°C] | [l/h/l Ansatz] | | | |
| 7000 | 45 | 366 | 95 | 30 | 33,0 | 19,4 | 10,2 |

**VII. Beispiel 7: Laufzeit 72 h**

| Ansatz-Volumen | Fe(NO₃)₂ | Eisen | Temperatur | Luft | CIELAB- Farbwerte Purton | | |
|---|---|---|---|---|---|---|---|
| | | | | | L^{∗} | a^{∗} | b^{∗} |
| [cm³] | [g/l] | [g] | [°C] | [l/h/l Ansatz] | | | |
| 7000 | 45 | 366 | 85 | 10 | 35,2 | 22,2 | 12,6 |

**VIII. Beispiel 8: Laufzeit 72 h**

| Ansatz-Volumen | Fe(NO₃)₂ | Eisen | Temperatur | Luft | CIELAB- Farbwerte Purton | | |
|---|---|---|---|---|---|---|---|
| | | | | | L^{∗} | a^{∗} | b^{∗} |
| [cm³] | [g/l] | [g] | [°C] | [l/h/l Ansatz] | | | |
| 7000 | 45 | 366 | 85 | 60 | 37,4 | 26,4 | 18,0 |

**IX. Beispiel 9: Laufzeit 72 h**

| Ansatz-Volumen | Fe(NO₃)₂ | Eisen | Temperatur | Luft | CIELAB- Farbwerte Purton | | |
|---|---|---|---|---|---|---|---|
| | | | | | L^{∗} | a^{∗} | b^{∗} |
| [cm³] | [g/l] | [g] | [°C] | [l/h/l Ansatz] | | | |
| 7000 | 45 | 366 | 85 | 30 | 36,1 | 24,3 | 14,6 |

**Tabelle I Zusammenfassung der Beispiele 1-9 mit CIELAB- Farbwerten:**

| **Versuchs bedingungen** | | | | | | **Fertiger Ansatz** | | | |
|---|---|---|---|---|---|---|---|---|---|
| Ansatz-Größe [cm³] | Vorlage | | Temperatur | Rührung | Begasung Luft | Laufzeit | CIELAB-Farbwerte Purton nach 60 sec Mahlung MDA^{∗} | | |
| | Fe(II)-nitrat | Fe | | | | | | | |
| | [g/l] | [g] | [°C] | [RPM] | [l/h/l Ansatz] | [h] | L^{∗} | a^{∗} | b^{∗} |
| 5110 | 45 | 366 | 85 | 200 | 30 | 116 | 38,0 | 28,5 | 19,2 |
| 7000 | 45 | 366 | 85 | 200 | 30 | 106 | 36,6 | 24,3 | 14,0 |
| 7000 | 25 | 366 | 85 | 200 | 30 | 72 | 36,5 | 17,3 | 11,2 |
| 7000 | 85 | 366 | 85 | 200 | 30 | 72 | 38,7 | 25,9 | 19,3 |
| 7000 | 45 | 366 | 75 | 200 | 30 | 59 | 42,4 | 20,3 | 19,8 |
| 7000 | 45 | 366 | 95 | 200 | 30 | 59 | 33,0 | 19,4 | 10,2 |
| 7000 | 45 | 366 | 85 | 200 | 10 | 72 | 35,2 | 22,2 | 12,6 |
| 7000 | 45 | 366 | 85 | 200 | 60 | 72 | 37,4 | 26,4 | 18,0 |
| 7000 | 45 | 366 | 85 | 200 | 30 | 72 | 36,1 | 24,3 | 16,6 |

| | | | | | | | | | |
|---|---|---|---|---|---|---|---|---|---|
| ^{∗}MDA = Mahlung mittels Mikrodismembrator mit Achatgarnitur. | | | | | | | | | |

**Tabelle II Zusammenfassung der Versuchsbedingungen der Beispiele**

| **Beispiel** | **Versuchs bedingungen** | | | | | | | |
|---|---|---|---|---|---|---|---|---|
| | Ansatz-Größe [cm³] | Vorlage | | Temperatur | Rührung | Begasung Luft | Laufzeit | RZA |
| | | Fe(II)-nitrat | Fe | | | | | |
| | | [g/l] | [g] | [°C] | [RPM] | [l/h/l Ansatz] | [h] | [g/l/h] |
| 1 | 5110 | 45 | 366 | 85 | 200 | 30 | 116 | 0,6 |
| 2 | 7000 | 45 | 366 | 85 | 200 | 30 | 106 | 0,9 |
| 3 | 7000 | 25 | 366 | 85 | 200 | 30 | 72 | 0,5 |
| 4 | 7000 | 85 | 366 | 85 | 200 | 30 | 72 | 1,7 |
| 5 | 7000 | 45 | 366 | 75 | 200 | 30 | 59 | 0,2 |
| 6 | 7000 | 45 | 366 | 95 | 200 | 30 | 59 | 0,4 |
| 7 | 7000 | 45 | 366 | 85 | 200 | 10 | 72 | 0,8 |
| 8 | 7000 | 45 | 366 | 85 | 200 | 60 | 72 | 0,8 |
| 9 | 7000 | 45 | 366 | 85 | 200 | 30 | 72 | 1,0 |

| | | | | | | | | |
|---|---|---|---|---|---|---|---|---|
| RZA = Raumzeitausbeute oder die Menge an Stoff/Hämatit, welche in g/l/h hergestellt wurde. | | | | | | | | |

**Tabelle III Zusammenfassung der Produkteigenschaften der Beispiele**

| **Beispiel** | **Fertiger Ansatz** | | | | | | |
|---|---|---|---|---|---|---|---|
| | Ausbeute-Volumen [l] | Resteisen [g] | Fe- Endanalyse | | CIELAB-Farbwerte Purton nach 60sec Mahlung MDA | | |
| | | | Fe(NO₃)₂ [g/l] | Fe₂O₃ [g/l] | | | |
| | | | | | L^{∗} | a^{∗} | b^{∗} |
| 1 | 3200 | 200,0 | 12,0 | 68,6 | 38,0 | 28,5 | 19,2 |
| 2 | 4800 | 91,0 | 5,3 | 91,4 | 36,6 | 24,3 | 14,0 |
| 3 | 6000 | 262,7 | 10,7 | 34,4 | 36,5 | 17,3 | 11,2 |
| 4 | 6100 | 65,1 | 40,2 | 120,7 | 38,7 | 25,9 | 19,3 |
| 5 | 6250 | 290,2 | 34,0 | 12,8 | 42,4 | 20,3 | 19,8 |
| 6 | 6100 | 252,4 | 30,8 | 21,3 | 33,0 | 19,4 | 10,2 |
| 7 | 6400 | 202,0 | 1,3 | 54,3 | 35,2 | 22,2 | 12,6 |
| 8 | 4000 | 253,0 | 33,4 | 55,1 | 37,4 | 26,4 | 18,0 |
| 9 | 4800 | 199,8 | 13,7 | 71,2 | 36,1 | 24,3 | 16,6 |

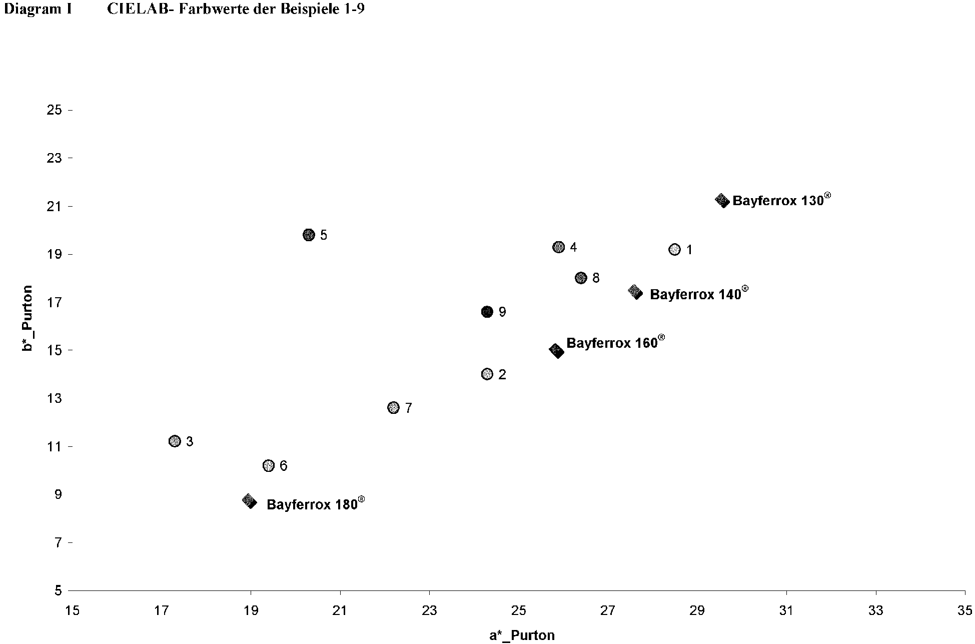

## Patentansprüche

1. Herstellung von Eisenoxidpigment gemäß dem Penniman-Prozess, **dadurch gekennzeichnet, dass** kein separater Keimherstellungsschritt erfolgt.

2. Herstellung gemäß Anspruch 1, **dadurch gekennzeichnet, dass**
a) eine Lösung enthaltend Eisen, Eisen(II)nitrat und Wasser vorgelegt wird;
b) die Lösung erhitzt wird;
c) während und/oder nach der Erhitzung sauerstoffhaltige Gase zur Lösung zugeführt werden, um eine Pigmentsuspension zu erhalten; und
d) die Pigmentsuspension anschließend filtriert, gewaschen und/oder getrocknet wird.

3. Herstellung gemäß Anspruch 1 oder 2, **dadurch gekennzeichnet, dass** der Anteil von Eisen, bezogen auf das Gesamtvolumen der Lösung, von 1 bis 250 g/l, insbesondere von 40 bis 85 g/l, beträgt.

4. Herstellung gemäß Anspruch 3, **dadurch gekennzeichnet, dass** der Anteil von Eisen, bezogen auf das Gesamtvolumen der Lösung, von 50 bis 75 g/l beträgt.

5. Herstellung gemäß einem der Ansprüche 1 bis 4, **dadurch gekennzeichnet, dass** der Anteil von Eisen(II)nitrat, bezogen auf das Gesamtvolumen der Lösung, von 1 bis 250 g/l, insbesondere von 40 bis 50 g/l beträgt.

6. Herstellung gemäß Anspruch 5, **dadurch gekennzeichnet, dass** der Anteil von Eisen(II)nitrat, bezogen auf das Gesamtvolumen der Lösung, von 44 bis 46 g/l, insbesondere 45 g/l, beträgt.

7. Herstellung gemäß einem der Ansprüche 1 bis 6, **dadurch gekennzeichnet, dass** die Lösung unter Atmosphärendruck auf von 60 bis 100 °C, insbesondere auf von 70 bis 95 °C, erhitzt wird.

8. Herstellung gemäß Anspruch 7, **dadurch gekennzeichnet dass** die Lösung auf von 84 bis 86 °C erhitzt wird.

9. Herstellung gemäß einem der Ansprüche 1 bis 6, **dadurch gekennzeichnet, dass** die Lösung unter Druck auf von 50 bis 250 °C, insbesondere auf von 100 bis 200 °C, erhitzt wird.

10. Herstellung gemäß einem der Ansprüche 1 bis 9, **dadurch gekennzeichnet, dass** von 1 bis 200 l/h sauerstoffhaltige Gase/l Lösung, insbesondere von 10 bis 40 l/h sauerstoffhaltige Gase/l Lösung, zugeführt wird.

11. Herstellung gemäß Anspruch 10, **dadurch gekennzeichnet, dass** von 25 bis 35 l/h sauerstoffhaltige Gase/ l Lösung zugeführt wird.

12. Herstellung gemäß einem der Ansprüche 1 bis 11, **dadurch gekennzeichnet, dass** Luft als sauerstoffhaltiges Gas eingesetzt wird.

13. Herstellung gemäß einem der Ansprüche 1 bis 12, **dadurch gekennzeichnet, dass** die Zufuhr von sauerstoffhaltigen Gasen über einen Zeitraum von 5 bis 150 Stunden, insbesondere über einen Zeitraum von 50 bis 120 Stunden, erfolgt.

14. Herstellung gemäß Anspruch 13, **dadurch gekennzeichnet, dass** die Zufuhr von sauerstoffhaltigen Gasen über einen Zeitraum von 65 bis 75 Stunden erfolgt.

15. Herstellung gemäß einem der Ansprüche 1 bis 14, **dadurch gekennzeichnet, dass** das Eisenoxidpigment desagglomeriert bzw. gemahlen wird.

16. Herstellung gemäß einem der Ansprüche 1 bis 15, **dadurch gekennzeichnet, dass** ein die Verarbeitbarkeit fördernder Zusatzstoff zum Pigment zugesetzt wird.

17. Herstellung gemäß einem oder mehreren der Ansprüche 1 bis 16, **dadurch gekennzeichnet, dass** das Eisenoxidpigment thermisch behandelt wird.

18. Verfahren zum Einfärben von kalk- und/oder zementgebundenen Baustoffen, Asphalt, Farben, Lacken, Farbgelen, Papier, Kunststoffen, Lebensmittelfarbstoffe und/oder pharmazeutische Produkte mit dem Eisenoxidpigment hergestellt gemäß einem der Ansprüche 1 bis 17, **dadurch gekennzeichnet, dass** das Eisenoxidpigment mit den kalk- und/oder zementgebundenen Baustoffen, Asphalt, Farben, Lacken, Farbgelen, Papier, Kunststoffen, Lebensmittelfarbstoffe und/oder pharmazeutischen Produkten vermischt wird.

19. Verwendung der Eisenoxidpigmente hergestellt gemäß einem der Ansprüche 1 bis 17, **dadurch gekennzeichnet, dass** das Eisenoxidpigment als technisches Oxid im Bereich Katalysatoren, Schleifmittel usw. eingesetzt wird.
